# EUROPÄISCHE PATENTSCHRIFT

(11) **EP 1 402 204 B1**
(45) Veröffentlichungstag und Bekanntmachung des Hinweises auf die Patenterteilung: **02.11.2005**
(21) Anmeldenummer: 02754177.0
(22) Anmeldetag: 29.05.2002
(51) Int. Cl.: F16H 59/10, F16H 61/12

(54) **SYSTEM UND VERFAHREN ZUM BESTIMMEN DER GANGAUSWAHL MITTELS WÄHLHEBEL**
SYSTEM AND METHOD FOR DETERMINING GEAR SELECTION BY MEANS OF A SELECTOR LEVER
SYSTEME ET PROCEDE POUR DETERMINER LA SELECTION DE RAPPORT AU MOYEN D'UN LEVIER DE SELECTION

(30) Priorität: 22.06.2001 DE 10130230
(43) Veröffentlichungstag der Anmeldung: 31.03.2004
(73) Patentinhaber: ROBERT BOSCH GMBH, 70442 Stuttgart (DE)
(72) Erfinder: VON HAEFTEN, Reinhard, 70597 Stuttgart (DE); RIES-MÜLLER, Klaus, 74906 Bad Rappenau (DE); LUH, Joachim, 74321 Bietigheim-Bissingen (DE)
(86) Internationale Anmeldenummer: PCT/DE2002/001973
(87) Internationale Veröffentlichungsnummer: WO 2003/001085

(56) Entgegenhaltungen:
- DE-A- 3 735 184
- DE-A- 4 220 247
- DE-A- 10 027 331

## Beschreibung

Die Erfindung betrifft ein System bzw. ein Verfahren gemäß dem Oberbegriff der Anspruches 1 bzw. 7, wie sie aus der DE-A-10027331 bekannt geworden sind.

### Stand der Technik

Bei automatischen Getrieben, beispielsweise Stufenautomat, CVT, ASG, erfolgt die Gangauswahl mittels eines Wählhebels. Dabei existiert üblicherweise eine mechanische Verbindung zwischen dem Wählhebel und dem Getriebe. Das heißt die für das Wählen eines anderen Ganges zu aktivierenden Ventile beziehungsweise Schalter werden direkt mit dem Wählhebel angesteuert. Die entsprechende

Wählhebelstellung wird mittels Wegsensoren erfasst und an das Getriebesteuergerät weitergeleitet.

Aufgrund von Sicherheitserwägungen wurde bereits vorgeschlagen, die Position des Wählhebels über zwei verschiedene Wege zu erfassen, das heißt eine redundante Information für die Wählhebelstellung zur Verfügung zu stellen. In dem Fall, dass unterschiedliche Wählhebelstellungen erfasst werden, wird dann sofort in einen Notlaufbetrieb geschaltet, der entweder noch ermöglicht, das Fahrzeug in einem Notlaufbetrieb in eine Werkstatt oder an einen geeigneten Ort zu bringen oder sogar zum Liegenbleiben des Fahrzeugs führt.

Die Erfindung wird ohne Beschränkung der Allgemeinheit anhand eines kontinuierlich verstellbaren Getriebes ("continuos variable transmission" (CVT)) beschrieben und ist in gleicher oder ähnlicher Weise auf andere Automatikgetriebe anwendbar. Kontinuierlich verstellbare Getriebe umfassen im Wesentlichen zwei Kegelradpaare und ein beispielsweise als Schubgliederband ausgelegtes Umschlingungsteil. Dabei ist eines der Kegelradpaare mit einem Antrieb verbunden, beispielsweise einem Verbrennungsmotor, während das andere Kegelradpaar mit einem Abtrieb verbunden ist. Zur Einstellung der Übersetzung des CVT-Getriebes und der Spannung des Umschlingungsteils bestehen das Antriebskegelradpaar und das Abtriebskegelradpaar im Allgemeinen aus je einem axial feststehenden und einem axial beweglichen Kegelrad. Das Antriebskegelradpaar wird auch als Antriebsscheibe oder Primärscheibe bezeichnet; das Abtriebskegelradpaar wird auch als Abtriebsscheibe beziehungsweise Sekundärscheibe bezeichnet. Die Anpressung der axial beweglichen Kegelräder gegen das Umschlingungsteil erfolgt im Allgemeinen durch Aufbau eines hydraulischen Drucks, beispielsweise durch eine Pumpe. Durch eine geeignete Wahl der Abstände beziehungsweise der Anpressdrücke der Kegelräder kann die gewünschte Übersetzung des CVT-Getriebes und die erforderliche Spannung des Umschlingungsteils eingestellt werden. Die Pumpe für den hydraulischen Antrieb der Kegelräder kann beispielsweise durch den Verbrennungsmotor angetrieben werden. Für die Kraftübertragung vom Verbrennungsmotor zum Antriebskegelradpaar kann beispielsweise ein Drehmomentenwandler und ein Planetensatz mit Kupplungen für Vorwärts- und Rückwärtsfahrt vorhanden sein.

### Vorteile der Erfindung

Das erfindungsgemäße System gemäß Anspruch 1 ist einer seits derart ausgebildet, dass bei einem ersten Signal und einem zweiten Signal, welche unterschiedlichen Wählhebelstellungen entsprechen, ermittelt wird, ob genau eines der Signale einer Zwischenstellung des Wählhebels entspricht und dass in dem Fall, dass genau eines der Signale einer Zwischenstellung des Wählhebels entspricht, das andere Signal zum Bestimmen der Gangauswahl verwendet wird. Bei dieser Plausibilitätserwägung wird davon ausgegangen, dass der Fahrer mit hoher Wahrscheinlichkeit den Wählhabel nicht in eine Zwischenstellung sondern in eine tatsächlich vorgesehene Wählhebelstellung gebracht hat. Damit ist es auch wahrscheinlich, dass die Wählhebelstellung, welche nicht der Zwischenstellung entspricht, die vom Fahrer gewünschte Wählhebelstellung ist, so dass diese Gangauswahl im Getriebe umgesetzt wird. Das erfindungsgemäße System ist auch derart ausgebildet, dass bei einem ersten Signal und einem zweiten Signal, welche unterschiedlichen Wählhebelstellungen entsprechen, Plausibilisierungsregeln zum Bestimmen der Gangauswahl verwendet werden, die auf der Auswertung eines oder mehrerer Sekundärsignale beruhen. Es ist also nicht erforderlich, den wahrscheinlich gewünschten Gang allein auf der Grundlage der verschiedenen Wählhebelsignale zu bestimmen. Vielmehr können weitere Signale, hier als Sekundärsignale bezeichnet, berücksichtigt werden, um den Fahrerwunsch zu realisieren.

Besonders zu bevorzugen ist, dass bei gleichen Signalen die der Wählhebelstellung entsprechende Gangauswahl bestimmt wird. In diesem Fall liegt mit hoher Wahrscheinlichkeit eine fehlerfreie Erfassung der Wählhebelstellung vor, so dass die in anderen Fällen vorteilhaft genutzten Plausibilitätserwägungen darauf reduziert sind, den der Wählhebelstellung entsprechenden Gang zu wählen.

In diesem Zusammenhang ist es besonders vorteilhaft, dass die möglichen Sekundärsignale zu der Gruppe Turbinendrehzahl, Primärdrehzahl, Sekundärdrehzahl, Abtriebsdrehzahl, Motordrehzahl, Motormoment, Feststellbremssignal gehören. Somit stehen zahlreiche potentielle Signale zur Verfügung, die bei den Plausibilitätserwägungen in Betracht gezogen werden. Wird beispielsweise die Wählhebelstellung P für Parken ausgegeben, und die Fahrzeuggeschwindigkeit beträgt mehr als 10 Km/h, so ist die Stellung P als unplausibel zu beurteilen.

Das erfindungsgemäße System ist ferner dadurch vorteilhaft weitergebildet, dass bei einem ersten Signal und einem zweiten Signal, welche unterschiedlichen Wählhebelstellungen entsprechen, ein Fehlersignal ausgegeben wird und/oder Notlaufmaßnahmen ergriffen werden. Ein Fehlersignal informiert den Fahrer und veranlasst ihn Gegenmaßnahmen zu ergreifen, beispielsweise eine Werkstatt anzufahren. Ferner kann das Fehlersignal dazu dienen, in einem Fehlerspeicher abgelegt zu werden. Notlaufmaßnahmen können beispielsweise in einer Drehmomentbegrenzung bestehen.

Beim erfindungsgemäßen System ist es besonders vorteilhaft, dass ein einer Zwischenstellung des Wählhebels entsprechendes Signal gleichbedeutend mit dem Nichtvorliegen eines einer Wählhebelstellung entsprechenden Signals ist, die keine Zwischenstellung ist. Es ist also grundsätzlich nicht erforderlich, spezielle Zwischenstellungssensoren vorzusehen, um die vorliegende Erfindung umzusetzen.

Es kann aber auch nützlich sein, dass ein einer Zwischenstellung des Wählhebels entsprechendes Signal durch einen Sensor explizit ermittelt wird. Auf diese Weise erhält man zusätzliche Informationen. Geht man bei fehlendem Wählhebelstellungssignal davon aus, dass eine Zwischenstellung vorliegt, so kann diese Annahme fehlerhaft sein, auch wenn ein Fehlen von Zwischenstellungssensoren im Hinblick auf die Ausrüstung eines Fahrzeugs besonders ökonomisch ist. Verwendet man hingegen Zwischenstellungssensoren, so lässt sich eindeutig die Art und die Tendenz des fehlerhaften Stellungssignals angeben und in die Auswertung einbeziehen.

Das erfindungsgemäße Verfahren gemäß Anspruch 7 ist einer seit derart ausgebildet, dass bei einem ersten Signal und einem zweiten Signal, welche unterschiedlichen Wählhebelstellungen entsprechen, ermittelt wird, ob genau eines der Signale einer Zwischenstellung des Wählhebels entspricht und dass in dem Fall, dass genau eines der Signale einer Zwischenstellung des Wählhebels entspricht, das andere Signal zum Bestimmen der Gangauswahl verwendet wird. Vorraussetzung für diese Plausibilisierung ist, dass der Fahrer mit großer Wahrscheinlichkeit nicht dazu tendiert, eine Zwischenstellung anzuwählen. Damit kann mit hoher Wahrscheinlichkeit davon ausgegangen werden, dass die ermittelte Wählhebelstellung dem Fahrerwunsch entspricht. Das erfindungsgemäße Verfahren ist auch derart ausgebildet, dass bei einem ersten Signal und einem zweiten Signal, welche unterschiedlichen Wählhebelstellungen entsprechen, Plausibilisierungsregeln zum Bestimmen der Gangauswahl verwendet werden, die auf der Auswertung eines oder mehrerer Sekundärsignale beruhen. Das erfindungsgemäße Verfahren ist insofern sehr flexibel im Hinblick auf die Berücksichtigung weiterer Signale, die bei den Plausibilitätserwägungen einbezogen werden können.

Besonders zu bevorzugen ist, dass bei gleichen Signalen die der Wählhebelstellung entsprechende Gangauswahl bestimmt wird. Da in diesem Fall mit hoher Wahrscheinlichkeit eine fehlerfreie Erfassung der Wählhebelstellung vorliegt, kann der der Wählhebelstellung entsprechende Gang gewählt werden.

In diesem Zusammenhang ist es besonders vorteilhaft, dass die möglichen Sekundärsignale zu der Gruppe Turbinendrehzahl, Primärdrehzahl, Sekundärdrehzahl, Abtriebsdrehzahl, Motordrehzahl, Motormoment, Feststellbremssignal gehören. Dabei handelt es sich um einige Beispiele von Größen, die im Rahmen des erfindungsgemäßen Verfahrens vorteilhaft genutzt werden können.

Das erfindungsgemäße Verfahren ist ferner dadurch vorteilhaft weitergebildet, dass bei einem ersten Signal und einem zweiten Signal, welche unterschiedlichen Wählhebelstellungen entsprechen, ein Fehlersignal ausgegeben wird und/oder Notlaufmaßnahmen ergriffen werden. Ein Fehlersignal gestattet dem Fahrer, Maßnahmen zu ergreifen, beispielsweise sein Fahrzeug in eine Werkstatt zu bringen. Ebenfalls kann ein Fehlersignal im Rahmen des erfindungsgemäßen Verfahrens in einen Fehlerspeicher geschrieben werden. Notlaufmaßnahmen können beispielsweise eine Drehmomentbegrenzung umfassen.

Beim erfindungsgemäßen Verfahren ist es besonders vorteilhaft, dass ein einer Zwischenstellung des Wählhebels entsprechendes Signal gleichbedeutend mit dem Nichtvorliegen eines einer Wählhebelstellung entsprechenden Signals ist, die keine Zwischenstellung ist. Es ist also nicht erforderlich, separate Zwischenstellungssensoren vorzusehen, was im Sinne eines besonderen einfachen Aufbaus des Systems ist.

Es kann aber auch nützlich sein, dass ein einer Zwischenstellung des Wählhebels entsprechendes Signal durch einen Sensor explizit ermittelt wird. Durch das explizite Ermitteln der Zwischenstellungen wird das Verfahren zwar aufwendiger jedoch gleichzeitig auch verlässlicher.

Der Erfindung liegt die Erkenntnis zugrunde, dass durch die Auswertung verschiedener Motormanagement- und Getriebesteuersignale eine Plausibilisierung von redundanten Wählhebelsignalen durchgeführt werden kann. Auf dieser Grundlage ist es möglich, das Fahrzeug ohne Einschränkungen im Fahrkomfort weiterzubetreiben, indem nämlich ein noch intaktes Wählhebelsignal beziehungsweise eine Gangauswahl unter Berücksichtigung von beispielsweise Drehzahlen herangezogen wird. Ebenfalls liegt es im Rahmen der vorliegenden Erfindung, mehr als zwei Wählhebelsignale zu erfassen und demnach mit drei oder einer Vielzahl von Wählhebelsignalen Plausibilitätserwägungen anzustellen.

### Zeichnungen

Die Erfindung wird nun mit Bezug auf die begleitenden Zeichnungen anhand bevorzugter Ausführungsformen beispielhaft erläutert.

Dabei zeigt:
- Figur 1: eine schematisierte Darstellung eines Antriebssystems eines Kraftfahrzeugs mit kontinuierlich verstellbarem Getriebe;
- Figur 2: ein Diagramm zur Erläuterung der Ermittlung von Wählhebelstellungen und
- Figur 3: ein Flussdiagramm eines erfindungsgemäßen Verfahrens.

### Beschreibung der Ausführungsbeispiele

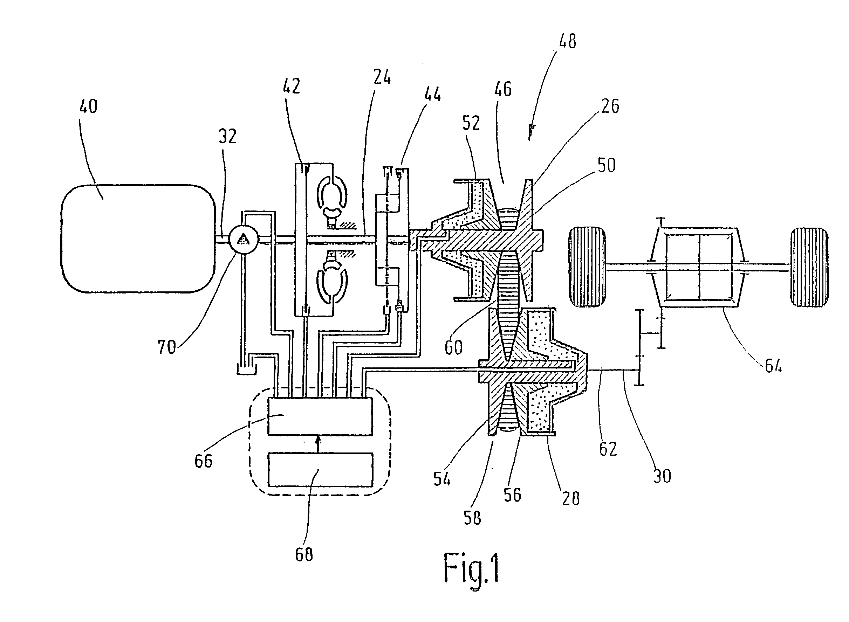

Figur 1 zeigt eine schematisierte Darstellung eines Antriebssystems eines Kraftfahrzeugs mit kontinuierlich verstellbarem Getriebe 48. Ein Motor 40 steht über einen Wandler 42 und ein Planetenradgetriebe 44 mit der Primärseite 46 eines kontinuierlich verstellbaren Getriebes 48 in Verbindung. Das kontinuierlich verstellbare Getriebe 46 hat zwei Kegelräder 50, 52 auf der Primärseite 46 und zwei Kegelräder 54, 56 auf der Sekundärseite 58. Das Kegelrad 52 auf der Primärseite 46 ist hydraulisch verstellbar. Ebenfalls ist das Kegelrad 56 auf der Sekundärseite 58 hydraulisch verstellbar. Die Kegelräder 50, 52, 54, 56 sind von einem Schubgliederband 60 umschlungen. Die Sekundärseite 58 des kontinuierlich verstellbaren Getriebes 48 ist über eine Abtriebswelle 62 und weiteren nicht näher zu erläuternden Komponenten mit einem Ausgleichsgetriebe 64 des Kraftfahrzeugs verbunden.

Weiterhin ist eine Hydraulik 66 vorgesehen, die durch eine Ansteuerung 68 angesteuert wird. Das Hydrauliksystem umfasst eine Pumpe 70, die von dem Motor 40 betrieben wird und so den entsprechenden Hydraulikdruck im System zur Verfügung stellt. Von der Hydraulik werden sowohl der Wandler 42, das Planetenradgetriebe 44, die verstellbare Kegelradscheibe 52 auf der Primärseite 46 des kontinuierlich verstellbaren Getriebes 48 als auch die Kegelradscheibe 56 auf der Sekundärseite 58 des kontinuierlich verstellbaren Getriebes 48 angesteuert. Die Ansteuerung der Getriebekomponenten über die Hydraulik 66 erfolgt unter anderem abhängig von einer Wählhebelstellung. In Figur 1 sind zusätzlich Signale eingezeichnet, die bei den erfindungsgemäßen Plausibilitätserwägungen berücksichtigt werden können. Eingezeichnet sind die Motordrehzahl 32, die Primärdrehzahl 26 des kontinuierlich verstellbaren Getriebes 48, die Sekundärdrehzahl 28 des kontinuierlich verstellbaren Getriebes 48, die Abtriebsdrehzahl 30 sowie die Turbinendrehzahl 24.

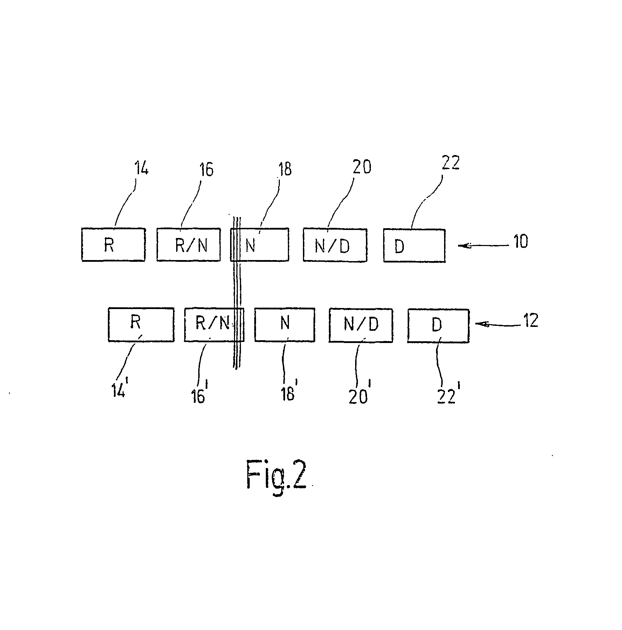

In Figur 2 ist die erfindungsgemäße redundante Ermittlung der Wählhebelstellung veranschaulicht. Der senkrechte Balken symbolisiert die tatsächliche Stellung des Wählhebels. In der oberen Reihe sind Sensoren 14, 16, 18, 20, 22 dargestellt. Korrespondierende Sensoren 14', 16', 18', 20', 22' sind in der unteren Reihe dargestellt. Somit liegen zwei Einrichtungen 10, 12 zum Erfassen der Wählhebelstellung vor. Liegt der Wählhebel bei der jeweiligen Einrichtung über dem Sensor R (14, 14'), so wird ein Signal für Rückwärtsgang gemeldet. Liegt der Wählhebel bei den jeweiligen Einrichtungen 10, 12 über dem Sensor N (18, 18') so wird ein Signal für Leerlauf ausgegeben. Ein Wählhebel über den Sensoren D (22, 22') der Einrichtungen 10, 12 gibt ein Signal für normalen Fahrbetrieb aus. Weiterhin sind noch Sensoren R/N (16, 16') für eine Zwischenstellung zwischen R und N sowie Sensoren N/D (20, 20') für eine Zwischenstellung zwischen N und D vorgesehen. Es ist erkennbar, dass die beiden Einrichtungen 10, 12 bei der angezeigten Wählhebelstellung unterschiedliche Signale ausgeben. Die Einrichtung 10 gibt ein Signal für Leerlauf aus. Die Einrichtung 12 gibt ein Signal für die Zwischenstellung zwischen dem Rückwärtsgang und dem Leerlauf an.

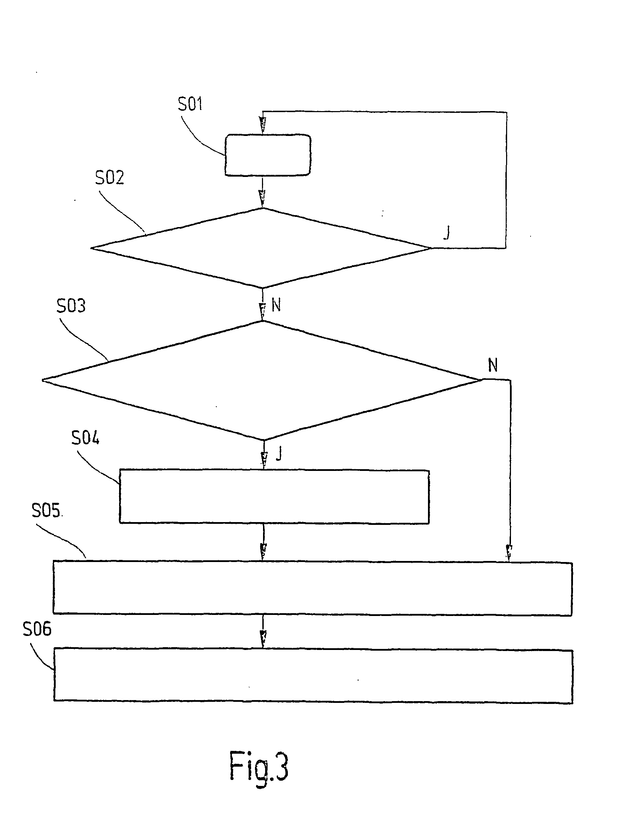

Bei der dargestellten Situation wird man im Allgemeinen davon ausgehen können, dass die untere Einrichtung 12 ein fehlerhaftes Signal ausgibt, während die obere Einrichtung 10 ein korrektes Signal ausgibt, denn von dem Fahrer ist im Allgemeinen nicht beabsichtigt, eine Zwischenstellung zu wählen. Somit wird das Signal der unteren Einrichtung 12 zunächst ignoriert und das Signal der oberen Einrichtung 10 wird als korrekt betrachtet. Nachfolgend ist es noch möglich, weitere Plausibilisierungserwägungen anzustellen, die nachfolgend anhand von Figur 3 und der Tabelle erläutert werden.

In Figur 3 wird ein beispielhafter Ablauf eines erfindungsgemäßen Verfahrens dargestellt. Zunächst wird die Bedeutung der in Figur 3 dargestellten Schritte angegeben.
- S01:: Start.
- S02:: Erstes Wählhebelstellungssignal gleich zweitem Wählhebelstellungssignal?
- S03:: Erstes Wählhebelstellungssignal oder zweites Wählhebelstellungssignal in Zwischenstellung? Gegebenenfalls Ermittlung des in Zwischenstellung befindlichen Wählhebelstellungssignals. Beispielhaftes Ergebnis: Erstes Wählhebelstellungssignal in Zwischenstellung.
- S04:: Erstes Wählhebelstellungssignal ignorieren; zweites Wählhebelstellungssignal wird als richtig betrachtet.
- S05:: Plausibilisierung der Wählhebelstellungssignale anhand einer Tabelle, das heißt Vergleich mit verschiedenen Motor- und Getriebesignalen.
- S06:: Entscheidung für das erste Wählhebelstellungssignal oder das zweite Wählhebelstellungssignal als richtig; Ausgabe eines Fehlersignals; unter Umständen Notlaufmaßnahmen, zum Beispiel Motormomentbegrenzung.

In Schritt S02 startet der Ablauf. In Schritt S02 wird geprüft, ob eine Gleichheit zwischen den Wählhebelstellungssignalen vorliegt. Ist dies der Fall, so wird davon ausgegangen, dass die Ermittlung der Wählhebelstellung korrekt ist, und der Ablauf kehrt zu Schritt S01 zurück. Liegt keine Gleichheit vor, so wird geprüft, ob eines der Wählhebelstellungssignale einer Zwischenstellung entspricht. Ist dies nicht der Fall, so wird sogleich zu Schritt S05 übergegangen. Befindet sich jedoch beispielsweise das erste Wählhebelstellungssignal in Zwischenstellung, während das zweite Wählhebelstellungssignal nicht einer Zwischenstellung entspricht, so wird zu Schritt S04 übergegangen. Dort wird das Zwischenstellungssignal ignoriert, und das zweite Wählhebelstellungssignal wird als vorläufig richtig betrachtet.

Danach wird auch von Schritt S04 zu Schritt S05 übergegangen. In Schritt S05 kann nun eine Plausibilisierung der Wählhebelstellungssignale anhand einer Auswahltabelle erfolgen. Bei dieser Plausibilisierung wird ein Vergleich mit verschiedenen Signalen vorgenommen, beispielsweise mit Motor- und Getriebesignalen.

Im nachfolgenden Schritt S06 wird entschieden, ob das erste Wählhebelstellungssignal oder das zweite Wählhebelstellungssignal letztlich als richtig betrachtet wird. Unter Umständen wird ein Fehlersignal ausgegeben, und weiterhin können Notlaufmaßnahmen, wie zum Beispiel eine Motormomentenbegrenzung, ergriffen werden.

In den nachfolgenden Tabellen werden die verschiedenen Zustände dargestellt, die bei den Plausibilisierungserwägungen berücksichtigt werden können. Es sind zahlreiche weitere Größen denkbar, die im Rahmen der vorliegenden Erfindung bei der Plausibilisierung verwendet werden, wobei nachfolgend einige besonders brauchbare Beispiele angegeben werden.

**Tabellen**

| **Wählhebelstellung** | **Motordrehzahl nmot** | **Turbinendrehzahl ntu** | **Primärdrehzahl npm** |
|---|---|---|---|
| P | nicht relevant | nmot>ntu> nmot-Off-set (z.B. 100/min), ntu liegt leicht un-terhalb der Motordrehzahl. | npm< Schwelle |
| R | nicht relevant | nmot>ntu> nmot-Off-set (z.B. 200/min), ntu liegt leicht un-terhalb der Motordrehzahl oder ist gleich nmot, bei miist> Schwelle Ausschluss Schubbetrieb) | Erkennung Drehrichtungsumkehr |
| N | nicht relevant | nmot>ntu> nmot-Off-set (z.B. 100/min), ntu liegt leicht unterhalb der Motordrehzahl | npm< Schwelle oder: \|ntu-npm\|> Schwelle und Fahr-pedal=0 |
| D | nicht relevant | nmot>ntu> nmot-Off-set (z.B. 200/min), ntu liegt leicht unterhalb der Motordrehzahl oder ist gleich nmot, bei miist> Schwelle (Ausschluss Schubbetrieb) | \|ntu-npm\| <Schwelle |

| **Wählhebelstellung** | **Abtriebsdrehzahl ≈ Fahrzeuggeschwindigkeit nab ≈ vfzg** | **Istmoment Motor miist** | **Feststellbremsensignal B_brems** |
|---|---|---|---|
| P | nab< Schwelle, Fahrzeug steht | miist< Schwelle= f(nmot, tmot)-> Schleppmoment | nicht relevant |
| R | 0<vfzg< Schwelle= f(miist) ->Fz rollt vorwärts bergab (trotz R), oder: vfzg<0 Fz | | nicht relevant |
| | fährt rückwärts falls Drehrichtungserkennung vorhanden z.B. über ABS-Raddrehzahlsensoren) | | |
| N | nicht relevant | miist< Schwelle= f(nmot, tmot) >Schleppmoment | nicht relevant |
| D | | bei vfzg=0 (Motorleerlauf): miist= f(nmot, tmot), Motorleistung bekannt | eventuell Berücksichtigung des Festbremsens |

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung zu verlassen, wie sie durch der Wortlaut des Ansprüche definiert wird.

## Patentansprüche

1. System zum Bestimmen der Gangauswahl mittels Wählhebel bei einem Automatikgetriebe mit
- mindestens zwei Einrichtungen (10,12) zum Erfassen der Wählhebelstellung (14, 16, 18, 20, 22), wobei jede Einrichtung (10, 12) ein der erfassten Wählhebelstellung (14, 16, 18, 20, 22) entsprechendes Signal erzeugt, und
- Mitteln zum Auswerten der Signale,
wobei anhand der Signale die Gangauswahl unter Berücksichtigung von Plausibilisierungsregeln bestimmbar ist, **dadurch gekennzeichnet, dass** bei einem ersten Signal und einem zweiten Signal, welche unterschiedlichen Wählhebelstellungen (14, 16, 18, 22) entsprechen, ermittelt wird, ob genau eines der Signale einer Zwischenstellung (16, 20) des Wählhebels entspricht, und
- falls genau eines der Signale einer Zwischenstellung (16, 20) des Wählhebels entspricht, das andere Signal zum Bestimmen der Gangauswahl einer Plausibilisierung unterworfen wird, und
- falls keines der Signale einer Zwischenstellung des Wählhebels entspricht, das erste und das zweite Signal der Plausibilisierung unterworfen werden,
wobei die Plausibilisierung Plausibilisierungsregeln zum Bestimmen der Gangauswahl verwendet, die auf der Auswertung eines oder mehrerer Sekundärsignale beruhen.

2. System nach Anspruch 1, **dadurch gekennzeichnet, dass** bei gleichen Signalen die der Wählhebelstellung (14, 16, 18, 20, 22) entsprechende Gangauswahl bestimmt wird.

3. System nach einem der vorangehenden Ansprüche, **dadurch gekennzeichnet, dass** die möglichen Sekundärsignale zu der Gruppe Turbinendrehzahl (24), Primärdrehzahl (26), Sekundärdrehzahl (28), Abtriebsdrehzahl (30), Motordrehzahl (32), Motormoment, Feststellbremssignal gehören.

4. System nach einem der vorstehenden Ansprüche, **dadurch gekennzeichnet, dass** bei einem ersten Signal und einem zweiten Signal, welche unterschiedlichen Wählhebelstellungen (14, 16, 18, 20, 22) entsprechen, ein Fehlersignal ausgegeben wird und/oder Notlaufmaßnahmen ergriffen werden.

5. System nach einem der vorstehenden Ansprüche, **dadurch gekennzeichnet, dass** ein einer Zwischenstellung des Wählhebels entsprechendes Signal gleichbedeutend mit dem Nichtvorliegen eines einer Wählhebelstellung entsprechenden Signals ist, die keine Zwischenstellung ist.

6. System nach einem der vorangehenden Ansprüche, **dadurch gekennzeichnet, dass** ein einer Zwischenstellung des Wählhebels entsprechendes Signal durch einen Sensor (16, 20) explizit ermittelt wird.

7. Verfahren zum Bestimmen der Gangauswahl mittels Wählhebel bei einem Automatikgetriebe, bei dem
- auf mindestens zwei verschiedenen Wegen die Wählhebelstellung erfasst wird und entsprechende Signale erzeugt werden und
- die Signale ausgewertet werden,
wobei anhand der Signale die Gangauswahl unter Berücksichtigung von Plausibilisierungsregeln bestimmt wird, **dadurch gekennzeichnet, dass** bei einem ersten Signal und einem zweiten Signal, welche unterschiedlichen Wählhebelstellungen (14, 16, 18, 22) entsprechen, ermittelt wird, ob genau eines der Signale einer Zwischenstellung (16, 20) des Wählhebels entspricht, und
- falls genau eines der Signale einer Zwischenstellung (16, 20) des Wählhebels entspricht, das andere Signal zum Bestimmen der Gangauswahl einer Plausibilisierung unterworfen wird, und
- falls keines der Signale einer Zwischenstellung des Wählhebels entspricht, das erste und das zweite Signal der Plausibilisierung unterworfen werden,
wobei die Plausibilisierung Plausibilisierungsregeln zum Bestimmen der Gangauswahl verwendet, die auf der Auswertung eines oder mehrerer Sekundärsignale beruhen.

8. Verfahren nach Anspruch 7, **dadurch gekennzeichnet, dass** bei gleichen Signalen die der Wählhebelstellung (14, 16, 18, 20, 22) entsprechende Gangauswahl bestimmt wird.

9. Verfahren nach einem der Ansprüche 7 bis 8, **dadurch gekennzeichnet, dass** die möglichen Sekundärsignale zu der Gruppe Turbinendrehzahl (24), Primärdrehzahl (26), Sekundärdrehzahl (28), Abtriebsdrehzahl (30), Motordrehzahl (32), Motormoment, Feststellbremssignal gehören.

10. Verfahren nach einem der Ansprüche 7 bis 9, **dadurch gekennzeichnet, dass** bei einem ersten Signal und einem zweiten Signal, welche unterschiedlichen Wählhebelstellungen (14, 16, 18, 20, 22) entsprechen, ein Fehlersignal ausgegeben wird und/oder Notlaufmaßnahmen ergriffen werden.

11. Verfahren nach einem der Ansprüche 7 bis 10, **dadurch gekennzeichnet, dass** ein einer Zwischenstellung des Wählhebels entsprechendes Signal gleichbedeutend mit dem Nichtvorliegen eines einer Wählhebelstellung entsprechenden Signals ist, die keine Zwischenstellung ist.

12. Verfahren nach einem der Ansprüche 7 bis 11, **dadurch gekennzeichnet, dass** ein einer Zwischenstellung des Wählhebels entsprechendes Signal durch einen Sensor (16, 20) explizit ermittelt wird.

## Claims

1. System for determining the gear selection by means of a selector lever in an automatic transmission, with
- at least two devices (10, 12) for detecting the selector-lever position (14, 16, 18, 20, 22), each device (10, 12) generating a signal corresponding to the detected selector-lever position (14, 16, 18, 20, 22), and
- means for evaluating the signals,
the gear selection being determinable by means of the signals, with plausibility rules being taken into account, **characterized in that**, in the case of a first signal and of a second signal which correspond to different selector-lever positions (14, 16, 18, 22), it is determined whether exactly one of the signals corresponds to an intermediate position (16, 20) of the selector lever, and,
- if exactly one of the signals corresponds to an intermediate position (16, 20) of the selector lever, the other signal for determining the gear selection is subjected to a plausibility check, and
- if none of the signals corresponds to an intermediate position of the selector lever, the first and the second signal are subjected to the plausibility check,
the plausibility check making use of plausibility rules for determining the gear selection which are based on the evaluation of one or more secondary signals.

2. System according to Claim 1, **characterized in that**, in the case of identical signals, the gear selection corresponding to the selector-lever position (14, 16, 18, 20, 22) is determined.

3. System according to one of the preceding claims, **characterized in that** the possible secondary signals belong to the group comprising the turbine rotational speed (24), primary rotational speed (26), secondary rotational speed (28), output rotational speed (30), engine rotational speed (32), engine torque and parking-brake signal.

4. System according to one of the preceding claims, **characterized in that**, in the case of a first signal and of a second signal which correspond to different selector-lever positions (14, 16, 18, 20, 22), a fault signal is emitted and/or emergency running measures are adopted.

5. System according to one of the preceding claims, **characterized in that** a signal corresponding to an intermediate position of the selector lever is equivalent to the absence of a signal which corresponds to a selector-lever position and which is not an intermediate position.

6. System according to one of the preceding claims, **characterized in that** a signal corresponding to an intermediate position of the selector lever is determined explicitly by means of a sensor (16, 20).

7. Method for determining the gear selection by means of a selector lever in an automatic transmission, in which
- the selector-lever position is detected in at least two different ways and corresponding signals are generated, and
- the signals are evaluated,
the gear selection being determined by means of the signals, with plausibility rules being taken into account, **characterized in that**, in the case of a first signal and of a second signal which correspond to different selector-lever positions (14, 16, 18, 22), it is determined whether exactly one of the signals corresponds to an intermediate position (16, 20) of the selector lever, and,
- if exactly one of the signals corresponds to an intermediate position (16, 20) of the selector lever, the other signal for determining the gear selection is subjected to a plausibility check, and
- if none of the signals corresponds to an intermediate position of the selector lever, the first and the second signal are subjected to the plausibility check,
the plausibility check making use of plausibility rules for determining the gear selection which are based on the evaluation of one or more secondary signals.

8. Method according to Claim 7, **characterized in that**, in the case of identical signals, the gear selection corresponding to the selector-lever position (14, 16, 18, 20, 22) is determined.

9. Method according to one of Claims 7 and 8, **characterized in that** the possible secondary signals belong to the group comprising the turbine rotational speed (24), primary rotational speed (26), secondary rotational speed (28), output rotational speed (30), engine rotational speed (32), engine torque and parking-brake signal.

10. Method according to one of Claims 7 to 9, **characterized in that**, in the case of a first signal and of a second signal which correspond to different selector-lever positions (14, 16, 18, 20, 22), a fault signal is emitted and/or emergency running measures are adopted.

11. Method according to one of Claims 7 to 10, **characterized in that** a signal corresponding to an intermediate position of the selector lever is equivalent to the absence of a signal corresponding to a selector-lever position which is not an intermediate position.

12. Method according to one of Claims 7 to 11, **characterized in that** a signal corresponding to an intermediate position of the selector lever is determined explicitly by means of a sensor (16, 20).

## Revendications

1. Système pour déterminer la sélection de rapport de vitesse au moyen d'un levier de sélection dans une transmission automatique, comportant :
- au moins deux dispositifs (10, 12) pour détecter la position (14, 16, 18, 20, 22) du levier de sélection, chaque dispositif (10, 12) produisant un signal correspondant à la position (14, 16, 18, 20, 22) détectée du levier de sélection, et
- des moyens pour évaluer les signaux, et permettant au moyen des signaux, de déterminer la sélection de rapport en tenant compte de règles du contrôle de vraisemblance,
**caractérisé en ce que**
- pour un premier et un deuxième signal qui correspondent à des positions différentes (14, 16, 18, 22) du levier de sélection, on détermine si l'un des signaux correspond exactement à une position intermédiaire (16, 20) du levier de sélection, et
- si l'un des signaux correspond exactement à une position intermédiaire (16, 20) du levier de sélection, l'autre signal est soumis à un contrôle de vraisemblance pour la détermination de la sélection de rapport, et
- si aucun des signaux ne correspond à une position intermédiaire du levier de sélection, le premier et le deuxième signal sont soumis au contrôle de vraisemblance,
le contrôle de vraisemblance utilisant pour déterminer la sélection de rapport, des règles de contrôle de vraisemblance qui reposent sur l'évaluation d'un ou de plusieurs signaux secondaires.

2. Système selon la revendication 1,
**caractérisé en ce que**
si les signaux sont identiques, la sélection de rapport correspondant à la position (14, 16, 18, 20, 22) du levier de sélection est déterminée.

3. Système selon l'une des revendications précédentes,
**caractérisé en ce que**
les signaux secondaires possibles font partie du groupe constitué par le régime de turbine (24), le régime primaire (26), le régime secondaire (28), le régime de sortie (30), le régime du moteur (32), le couple moteur, le signal du frein d'arrêt.

4. Système selon l'une des revendications précédentes,
**caractérisé en ce que**
pour un premier et un deuxième signal qui correspondent à des positions différentes (14, 16, 18, 20, 22) du levier de sélection, on émet un signal d'anomalie et/ou on prend des mesures de fonctionnement de secours.

5. Système selon l'une des revendications précédentes,
**caractérisé en ce qu'**
un signal correspondant à une position intermédiaire du levier de sélection équivaut à l'absence d'un signal correspondant à une position du levier de sélection qui n'est pas une position intermédiaire.

6. Système selon l'une des revendications précédentes,
**caractérisé en ce qu'**
un signal correspondant à une position intermédiaire du levier de sélection est déterminé explicitement par un capteur (16, 20).

7. Procédé pour déterminer la sélection de rapport de vitesse au moyen d'un levier de sélection dans une transmission automatique, selon lequel :
- on détecte la position du levier de sélection et des signaux correspondants sont émis au moins de deux façons différentes, et
- on évalue les signaux, et on détermine au moyen des signaux la sélection de rapport en tenant compte de règles du contrôle de vraisemblance,
**caractérisé en ce que**
pour un premier et un deuxième signal qui correspondent à des positions différentes (14, 16, 18, 22) du levier de sélection, on détermine si l'un des signaux correspond exactement à une position intermédiaire (16, 20) du levier de sélection, et
- si l'un des signaux correspond exactement à une position intermédiaire (16, 20) du levier de sélection, l'autre signal est soumis à un contrôle de vraisemblance pour la détermination de la sélection de rapport, et
- si aucun des signaux ne correspond à une position intermédiaire du levier de sélection, le premier signal et le deuxième signal sont soumis au contrôle de vraisemblance,
le contrôle de vraisemblance utilisant pour déterminer la sélection de rapport, des règles de contrôle de vraisemblance qui reposent sur l'évaluation d'un ou de plusieurs signaux secondaires.

8. Procédé selon la revendication 7,
**caractérisé en ce que**
si les signaux sont identiques, la sélection de rapport correspondant à la position (14, 16, 18, 20, 22) du levier de sélection est déterminée.

9. Procédé selon l'une quelconque des revendications 7 à 8,
**caractérisé en ce que**
les signaux secondaires possibles font partie du groupe constitué par le régime de turbine (24), le régime primaire (26), le régime secondaire (28), le régime de sortie (30), le régime du moteur (32), le couple moteur, le signal du frein d'arrêt.

10. Procédé selon l'une quelconque des revendications 7 à 9,
**caractérisé en ce que**
pour un premier et un deuxième signal qui correspondent à des positions différentes (14, 16, 18, 20, 22) du levier de sélection, on émet un signal d'anomalie et/ou on prend des mesures de fonctionnement de secours.

11. Procédé selon l'une quelconque des revendications 7 à 10,
**caractérisé en ce qu'**
un signal correspondant à une position intermédiaire du levier de sélection équivaut à l'absence d'un signal correspondant à une position du levier de sélection qui n'est pas une position intermédiaire.

12. Procédé selon l'une quelconque des revendications 7 à 11,
**caractérisé en ce qu'**
un signal correspondant à une position intermédiaire du levier de sélection est déterminé explicitement par un capteur (16, 20).
